# EUROPÄISCHE PATENTSCHRIFT

(11) **EP 1 115 638 B1**
(45) Veröffentlichungstag und Bekanntmachung des Hinweises auf die Patenterteilung: **28.08.2002**
(21) Anmeldenummer: 99955739.0
(22) Anmeldetag: 17.09.1999
(51) Int. Cl.: B65G 47/76

(54) **VERTEILVORRICHTUNG FÜR STÜCKGUT**
DISTRIBUTION DEVICE FOR PIECE GOODS
DISPOSITIF DE DISTRIBUTION POUR ARTICLES INDIVIDUELS

(30) Priorität: 23.09.1998 DE 19843623
(43) Veröffentlichungstag der Anmeldung: 18.07.2001
(73) Patentinhaber: SIEMENS AKTIENGESELLSCHAFT, 80333 München (DE)
(72) Erfinder: FRITZSCHE, Roland, D-90547 Stein (DE)
(86) Internationale Anmeldenummer: DE9902990
(87) Internationale Veröffentlichungsnummer: WO00017078

(56) Entgegenhaltungen:
- EP-A- 0 199 412
- EP-A- 0 794 137
- DE-A- 3 422 150

## Beschreibung

Die Erfindung betrifft eine Verteilvorrichtung für Stückgut nach dem Oberbegriff des Anspruches 1 (EP 0 794 137 A). Zum automatischen Sortieren von bereits vereinzelten, auf Transportbahnen transportierten Stückgütern, wie z.B. Pakete, Kleingut, Frachtgut, Behälter müssen diese von einer ankommenden Richtung auf mindestens zwei Richtungen verteilt werden, um nach einer oder mehreren hintereinander angeordneten Verteilstufen in mehrere Sortierstellen/behälter zu gelangen.

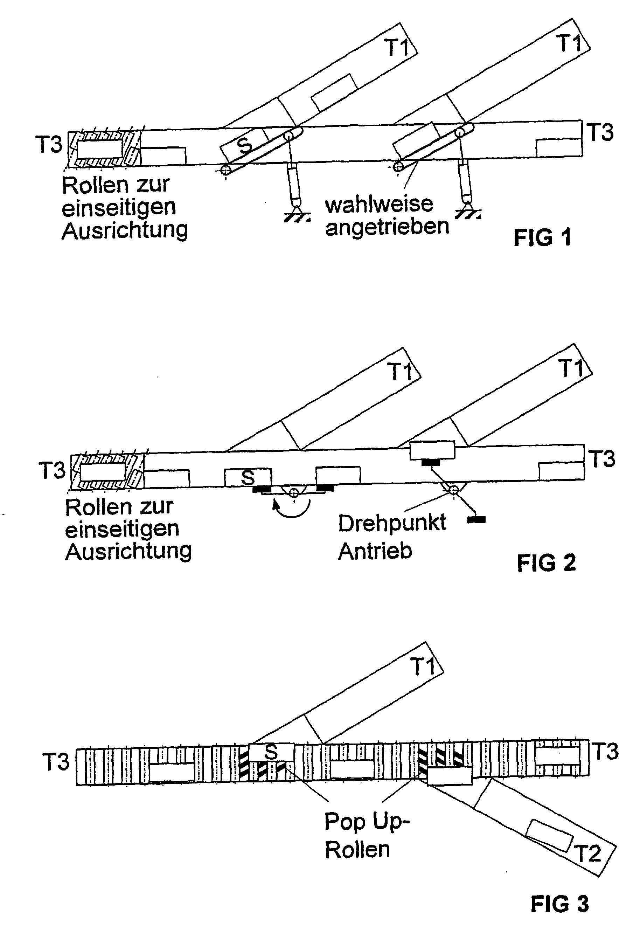

Die bekannten Vorrichtungen zur horizontalen Verteilung besitzen nur eine Abzweigung und verteilen daher nur auf zwei Richtungen. Dabei werden in einer ersten Variante (FIG 1) die Stückgüter mittels eines seitlich an der Haupttransportbahn drehbar befestigten und in die Haupttransportbahn einschwenkbaren Ablenkelementes zur abzweigenden Transportbahn abgelenkt (FAM-Gurtbandsorter der Fa. FAM Magdeburger Förderanlagen und Baumaschinen).

In einer zweiten Variante (FIG 2) erfolgt die Ausschleusung durch rotierende Auswerfer (ROTA-Sorter der Fa. Lippert).

Beim Einsatz von Rollenbahnen als Transportbahnen sind in einer dritten Variante (FIG 3) an der Abzweigstelle zwischen den Rollen der Haupttransportbahn zur abzweigenden Transportbahn ausgerichtete angetriebene schmale Rollen angeordnet, die bei Notwendigkeit über die Transportebene der Haupttransportbahn angehoben werden und somit das betreffende Stückgut in die abzweigende Transportbahn transportieren (Pop UP Sorter der Fa. Van Der Lande Industries).

Benötigt man eine Verteilung in drei Richtungen, so müssen zwei dieser bekannten Verteilvorrichtungen hintereinander angeordnet werden. Das hat einen hohen Platzbedarf in der Länge bei relativ hohem Aufwand zur Folge.

Der im Anspruch 1 angegebenen Erfindung liegt daher die Aufgabe zugrunde, eine Verteilvorrichtung für Stückgüter in annähernd horizontaler Ebene zu schaffen, mit welcher das ankommende Stückgut mit geringem Aufwand und Platzbedarf auf drei Transportbahnen verteilt werden kann.

Der Erfindung liegt der Kerngedanke zugrunde, ein Ablenkelement an seinen Enden drehbar gelagert über die gesamte Bahnbreite gezielt zu verschieben, so daß es sich je nach Notwendigkeit an einem der Ränder der zuführenden Transportbahn befindet und damit den Transport in diese mittlere Richtung freigibt, oder schräg in der zuführenden Transportbahn an ihrem Ende steht und die Stückgüter in eine der beiden abzweigenden Transportbahnen lenkt.

In einer vorteilhaften Ausbildung gemäß Anspruch 2 weist das Ablenkelement eine glatte ablenkende Oberfläche mit geringem Reibungskoeffizienten auf, so daß nur geringe Bremskräfte auf die Stückgüter wirken.

In einer weiteren vorteilhaften Ausbildung gemäß Anspruch 3 besteht die die Stückgüter ablenkende Oberfläche des Ablenkelementes aus einem angetriebenen Endlosförderband. Dadurch werden die Stückgüter am Ablenkelement aktiv in Richtung der jeweiligen abzweigenden Transportbahn abgelenkt. Das hat eine weitgehend schlupffreie lagedefinierte Abzweigbewegung der Stückgüter zur Folge.

Um die Abstände zwischen den Stückgütern möglichst gering zu halten und dadurch hohe Durchsätze an Stückgütern zu erreichen, sind in einer vorteilhaften Ausgestaltung nach Anspruch 4 die Ablenkmechanismen und die Steuerung so ausgelegt, daß eine Bewegung des Ablenkelementes auch erfolgen kann, wenn sich an ihm ein Stückgut befindet.

Gemäß der Ansprüche 5,6 und 7 sind als vorteilhafte Ausführungen der Hubmechanismen pneumatische oder hydraulische Hubzylinder, Hubmagnete sowie elektromechanische Antriebsbaugruppen wie Linearantriebe oder Elektromotoren mit Bewegungsumformern vorgesehen.

Nachfolgend wird die Erfindung in einem Ausführungsbeispiel näher erläutert. Die Zeichnungen zeigen dabei in
- FIG 1 bis 3: Draufsichten auf Lösungen aus dem Stand der Technik
- FIG 4 bis 7: schematische Draufsichten auf die Verteilvorrichtung mit verschiedenen Stellungen des Ablenkelementes A

Zu sortierende Stückgüter S werden auf Transportbahnen T transportiert. Diese können z.B. mittels angetriebener Unterflurbänder oder Rollenbahnen realisiert werden. An einem stabil ausgeführten Führungsgestell F ist ein Ablenkelement A mit seinem in Transportrichtung hinteren Ende über einen Drehpunkt D1 senkrecht zur zuführenden Transportbahn T3 über die gesamte Breite geführt. Der Drehpunkt D1 ist mit dem Stößel eines Hubmechanismus H1 als Antrieb für die Bewegung des hinteren Endes des Ablenkelementes A verbunden. Direkt nach dem Führungsgestell F verzweigt sich die horizontale zuführende Transportbahn T3 in zwei nach rechts und links unter einen Winkel von ca. 30° abzweigende horizontal ausgerichtete Transportbahnen T2 und T1 und in eine dritte Transportbahn T3 in gerader Weiterführung der zuführenden Transportbahn T3. Das in Transportrichtung vordere Ende des Ablenkelementes A ist ebenfalls über einen Drehpunkt D2 mit einem Hubmechanismus H2 verbunden. Dieser Hubmechanismus H2 ist aber nicht starr geführt, sondern schwenkbar in einem Drehpunkt D3 stationär befestigt.

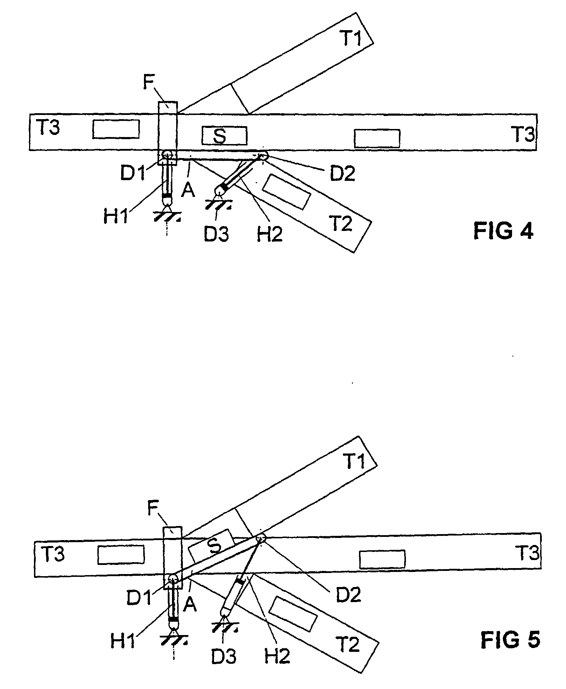

Gemäß der FIG 4 sind die Stößel beider Hubmechanismen H1, H2 eingefahren, das Ablenkelement A befindet sich am Rand der Transportbahn T3 auf der Seite der abzweigenden Transportstrecke T2 und gibt somit die Transportbahn T3 frei, d.h. die Stückgüter werden geradeaus weitertransportiert.

Soll ein ankommendes Stückgut S über die Transportbahn T1 weitertransportiert werden, so fährt der Hubmechanismus H2 den Stößel mit dem vorderen Ende des Ablenkelementes A über die gesamte Breite der Transportbahn T3 aus, wobei das Ablenkelement A aufgrund seiner Länge diese Bewegung erlaubt.

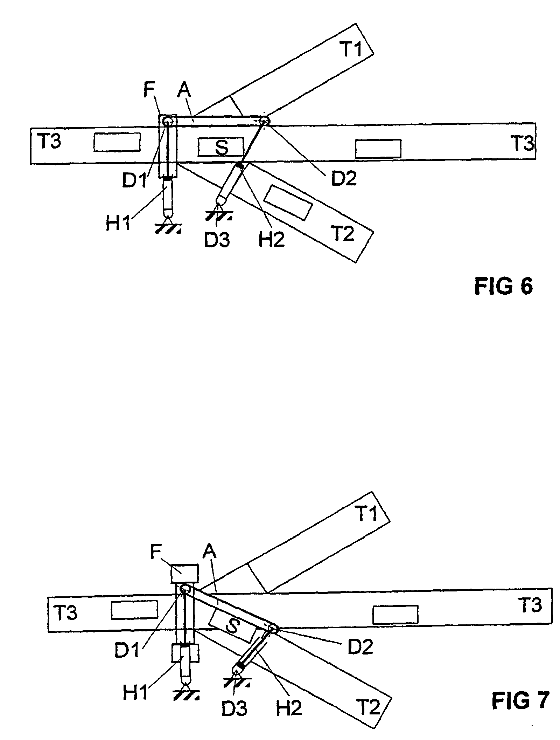

Wie in FIG 5 zu erkennen, wird das Stückgut an dem Ablenkelement A in Richtung der Transportbahn T1 abgelenkt. Soll das nächste Stückgut S wieder auf der Transportbahn T3 weitertransportiert werden, muß das Ablenkelement A wieder in eine parallele Position an den Rand der Transportbahn T3 verfahren werden.

Gemäß der FIG 6 wird der Stößel des geführten Hubmechanismus H1 über die Breite der Transportbahn ausgefahren, der Stößel des anderen Hubmechanismus H2 behält seine Stellung.

Damit befindet sich das Ablenkelement A auf der Seite der abzweigenden Transportbahn T1.

Da das nächste Stückgut S zur Transportbahn T2 abgelenkt werden soll, wird gemäß gemäß der FIG 7 der Stößel des Hubmechanismus H2 wieder eingefahren, so daß sich das Ablenkelement A schräg auf der Transportbahn T3 in Richtung der Transportbahn T2 befindet, in welche das betreffende Stückgut S entsprechend abgelenkt wird.

Die Verteilung der Stückgüter S erfolgt auf der Basis von Verteilinformationen, die den Stückgütern S mittels nicht dargestellter bekannter Sensoren und Auswerteeinrichtungen entnommen werden. Die örtliche Lage der Stückgüter S auf den Transportbahnen T, insbesondere vor den Verteilpunkten wird ebenfalls mittels Sensoren ermittelt. Gemäß dieser Information werden mithilfe einer nicht dargestellten Steuerungseinrichtung die Stößel der Hubmechanismen H1, H2 so angesteuert, daß das jeweilige Stückgut S aufgrund seiner erkannten Verteilinformation und Position verteilt wird. Bei einer Verteilung entlang der Transportbahn T3 kann sich das Ablenkelement A an beiden Seiten der Transportbahn T3 befinden.

Soll für die Einhaltung möglichst geringer Abstände der Stückgüter zueinander zur Erzielung eines hohen Durchsatzes das Ablenkelement A unter Anwesenheit von Stückgütern S im Ausschleuse-/Verteilbereich bewegt werden, so muß sich vorher das Ablenkelement A auf der Seite der Transportbahn T3 befinden, von der aus das Ablenkelement A durch Bewegung des Stößels des Hubelementes H2 das jeweilige Stückgut S in die abzweigenden Transportbahnen T1 oder T2 lenkt.

## Patentansprüche

1. Verteilvorrichtung für Stückgut mit einem Ablenkelement (A) zum Verteilen der auf einer angetriebenen Transportbahn (T3) in annähernd horizontaler Richtung zugeführten Stückgüter (S) auf abführende Transportbahnen mit annähernd gleicher Transportebene wie die zuführende Transportbahn (T3), **dadurch gekennzeichnet, daß** von einem Verteilpunkt drei abführende Transportbahnen (T1,T2,T3) abgehen, wobei die mittlere Transportbahn (T3) in geradliniger Weiterführung der Zuführrichtung verläuft, das Ablenkelement (A) an seinen Enden über Drehpunkte (D1, D2) mit horizontal verschiebbaren Stößeln ortsfester Hubmechanismen (H1, H2) zum Verschieben der Enden von einer Seitenbegrenzung der mittleren Transportbahn (T3) zur anderen verbunden ist, wobei einer der beiden Hubmechanismen (H1,H2) senkrecht zur Transportrichtung der mittleren Transportbahn (T3) fixiert ist und der andere Hubmechanismus (H1,H2) schwenkbar befestigt ist und wobei das Ablenkelement (A) so positioniert und in der Länge dimensioniert ist , daß das Ablenkelement (A) in seinen Endstellungen entweder seitlich am äußeren Rand der mittleren Transportbahn (T3) oder schräg über die gesamte mittlere Transportbahn (T3) in Verlängerung der in Transportrichtung hinteren Begrenzung einer der beiden äußeren abführenden Transportbahnen (T1,T2) verläuft.

2. Verteilvorrichtung nach Anspruch 1, **dadurch gekennzeichnet, daß** das Ablenkelement (A) eine glatte ablenkende Oberfläche mit geringem Reibungskoeffizienten aufweist.

3. Verteilvorrichtung nach Anspruch 1, **dadurch gekennzeichnet, daß** der die Stückgüter (S) ablenkende Teil des Ablenkelementes (A) aus einem angetriebenen Endlosförderband besteht.

4. Verteilvorrichtung nach Anspruch 1, **dadurch gekennzeichnet, daß** das Ablenkelement (A) unter Anwesenheit von Stückgütern (S) im Ausschleuse-/Verteilbereich bewegbar ist.

5. Verteilvorrichtung nach Anspruch 1, **dadurch gekennzeichnet, daß** die Hubmechanismen (H1,H2) aus pneumatischen oder hydraulischen Hubzylindern bestehen.

6. Verteilvorrichtung nach Anspruch 1, **dadurch gekennzeichnet, daß** die Hubmechanismen (H1, H2) aus Hubmagneten bestehen.

7. Verteilvorrichtung nach Anspruch 1, **dadurch gekennzeichnet, daß** die Hubmechanismen (H1, H2) aus elektromechanischen Baugruppen mit Elektromotoren bestehen.

## Claims

1. Distributing apparatus for piece goods, having a deflecting element (A) by means of which the piece goods (S) fed in a more or less horizontal direction on a driven transporting path (T3) are distributed onto discharging transporting paths with more or less the same transporting plane as the feeding transporting path (T3), **characterized in that** three discharging transporting paths (T1, T2, T3) extend from one point of distribution, it being the case that the central transporting path (T3) runs in rectilinear continuation of the feed direction, the deflecting element (A) is connected at its ends, via points of rotation (D1, D2), to horizontally displaceable push rods of stationary lifting mechanisms (H1, H2) for displacing the ends from one lateral boundary of the central transporting path (T3) to the other, it being the case that one of the two lifting mechanisms (H1, H2) is fixed perpendicularly to the transporting direction of the central transporting path (T3) and the other lifting mechanism (H1, H2) is fastened in a pivotable manner, and it being the case that the deflecting element (A) is positioned, and dimensioned in terms of length, such that, in its end positions, the deflecting element (A) runs either laterally on the outer border of the central transporting path (T3) or obliquely over the entire central transporting path (T3) in extension of the rear boundary, as seen in the transporting direction, of one of the two outer discharging transporting paths (T1, T2).

2. Distributing apparatus according to Claim 1, **characterized in that** the deflecting element (A) has a smooth deflecting surface with a low coefficient of friction.

3. Distributing apparatus according to Claim 1, **characterized in that** that part of the deflecting element (A) which deflects the piece goods (S) comprises a driven endless conveying belt.

4. Distributing apparatus according to Claim 1, **characterized in that** it is possible to move the deflecting element (A) with piece goods (S) present in the ejecting/distributing region.

5. Distributing apparatus according to Claim 1, **characterized in that** the lifting mechanisms (H1, H2) comprise pneumatic or hydraulic lifting cylinders.

6. Distributing apparatus according to Claim 1, **characterized in that** the lifting mechanisms (H1, H2) comprise lifting magnets.

7. Distributing apparatus according to Claim 1, **characterized in that** the lifting mechanisms (H1, H2) comprise electromechanical subassemblies with electric motors.

## Revendications

1. Dispositif de distribution pour articles individuels, comportant un élément (A) déflecteur pour distribuer des articles (S), apportés en direction approximativement horizontale sur une bande (T3) transporteuse entraînée, sur des bandes transporteuses d'évacuation ayant approximativement le même plan de transport que la bande (T3) transporteuse d'alimentation, **caractérisé en ce que** trois bandes (T1, T2, T3) transporteuses d'évacuation partent d'un point de distribution, la bande (T3) transporteuse centrale s'étendant en ligne droite dans le prolongement de la direction d'alimentation, l'élément (A) déflecteur étant relié à ses extrémités, par des pivots (D1, D2), à des poussoirs horizontalement coulissants de mécanismes (H1, H2) de levage à poste fixe pour déplacer les extrémités d'une délimitation latérale de la bande (T3) transporteuse centrale à l'autre, un des deux mécanismes (H1, H2) de levage étant immobilisé perpendiculairement à la direction de transport de la bande (T3) transporteuse centrale et l'autre mécanisme (H1, H2) de levage étant fixé à pivotement, et l'élément (A) déflecteur étant positionné et dimensionné en longueur de telle sorte que l'élément (A) déflecteur, dans ses positions finales, s'étend soit sur le côté du bord extérieur de la bande (T3) transporteuse centrale, soit en oblique sur l'ensemble de la bande (T3) transporteuse centrale, dans le prolongement de la délimitation arrière, dans la direction de transport, d'une des deux bandes (T1, T2) transporteuses extérieures d'évacuation.

2. Dispositif de distribution suivant la revendication 1, **caractérisé en ce que** l'élément (A) déflecteur possède une surface déflectrice lisse ayant un faible coefficient de frottement.

3. Dispositif de distribution suivant la revendication 1, **caractérisé en ce que** la partie de l'élément (A) déflecteur qui dévie les articles (S) consiste en une bande transporteuse sans fin entraînée.

4. Dispositif de distribution suivant la revendication 1, **caractérisé en ce que** l'élément (A) déflecteur peut être déplacé en présence d'articles (S) dans la région de tri/distribution.

5. Dispositif de distribution suivant la revendication 1, **caractérisé en ce que** les mécanismes (H1, H2) de levage consistent en des vérins de levage pneumatiques ou hydrauliques.

6. Dispositif de distribution suivant la revendication 1, **caractérisé en ce que** les mécanismes (H1, H2) de levage consistent en des aimants de levage.

7. Dispositif de distribution suivant la revendication 1, **caractérisé en ce que** les mécanismes (H1, H2) de levage consistent en des groupes électromécaniques à moteurs électriques.
